# EUROPEAN PATENT APPLICATION

(11) **EP 2 192 769 A1**
(43) Date of publication of application: **02.06.2010**
(21) Application number: 08833572.4
(22) Date of filing: 02.09.2008
(51) Int. Cl.: H04N 5/91, B41J 5/30, G11B 27/034, H04N 5/76

(54) **IMAGE FORMING APPARATUS**

(30) Priority: 28.09.2007 JP 2007254727
(71) Applicant: Sony Corporation, Tokyo 108-0075 (JP)
(72) Inventor: NAGASAWA, Toshiyuki, Tokyo 108-0075 (JP); SAKURA, Kohei, Tokyo 108-0075 (JP)
(74) Representative: Müller - Hoffmann & Partner
(86) International application number: PCT/JP2008/065747
(87) International publication number: WO 2009/041222

(57) **Abstract**

Image data group dividing means is provided for comparing a writing capacity of a writing medium to a data volume of a read image data group that is an aggregation of image data that is read by a user image reading device (image data reading means), and for dividing the read image data group into a plurality of written image data groups that will fit within the writing capacity in case that the data volume is greater, a printer device (image forming means) forms an index of images for each of the written image data groups that are divided by the image data group dividing means, and an image data writing device (image data writing means) writes to the writing medium each of the written image data groups that are divided by the image data group dividing means.

## Description

### Technical Field

The present invention relates to an image forming apparatus that includes image data reading means for reading image data that is stored in a storage medium, image forming means that is capable of forming an image in a recording medium based on the image data that is read by the image data reading means, and image data writing means for writing the image data that is read by the image data reading means to a writing medium. More specifically, the present invention relates to a technology that makes it easy, in case where the image data is written to a plurality of writing media, for a user to know what content has been written to each of the writing media.

### Background Art

In recent years, the spread of various types of image forming apparatuses has become noticeable. For example, printers, which are one type of image forming apparatuses, have become more compact, with more advanced functions, and can now be installed anywhere. With sublimation type color printers, in particular, high-quality photographic printing results can be expected, so the printers are widely used even in business, such as print services at parties, events, and the like, as well as at theme parks, tourist facilities, print shops, and the like. This type of printer for business use is used to provide various types of services in a kiosk type print system (print kiosk apparatus) which is connected to a reception terminal.

The print kiosk apparatus is a self-service type of image forming apparatus that forms (prints) an image from image data that the user brings, and it is equipped with a memory card slot and a color liquid crystal display or the like that displays the image data, which is stored in a memory card. When the user inserts a memory card that he has brought with him into the memory card slot, the image data in the memory card is read, and preview images of the image data are displayed on the color liquid crystal display. The user can then freely choose the images he wants to print from among the preview images.

After the user chooses the images that he wants to print, specifies the number of prints, and deposits a specified amount of money that corresponds to the total number of prints, a color printer that is provided in the print kiosk apparatus prints the selected images one at a time on photographic print paper and outputs the photographs. In other words, the user can predict the photographically printed results by looking at the preview images that are displayed on the color liquid crystal display, can select only the images he wants to print, and can obtain the photographically printed results (photographs) of the selected images by performing the color printing.

The print kiosk apparatus described here not only prints the images, but also copies the memory card image data to a writing medium such as a CD-R or the like as a back-up and performs an index print service that creates index prints based on the image data. Further, as a technology that is related to the print kiosk apparatus, a technology is known that creates an index on a CD-R jacket, such that the image data that is stored in the CD-R can be inferred (refer to Patent Document 1, for example).
[Patent Document 1] Japanese Patent Application Publication No. JP-A-2006-168199

A technology is also known that, in order to make it easy to reprint the stored image data, creates identification information that is useful for reprinting, stores the image data and the identification information in association with one another in a hard disk drive, and, when the image data is printed, prints the images together with the associated identification information (refer to Patent Document 2, for example).
[Patent Document 2] Japanese Patent Application Publication No. JP-A-2005-169735

In addition, a technology is also known that, by acquiring the image data for at least one image that is stored in the writing medium such as the CD-R or the like and printing an image that is based on the acquired image data on a jacket for the CD-R or the like, makes it easy for the user to know what content is written on the CD-R or the like (refer to Patent Document 3, for example).
[Patent Document 3] Japanese Patent Application Publication No. JP-A-2006-272789

A technology is also known that, in order to make it easy to perform an operation that takes as many as possible of the images in a single order and writes them to a single writing medium, is provided with a write control device that takes information about the images that are designated by the single order to be written to the writing medium and displays the information in a manner that makes it possible to specify the images that are to be stored in the single writing medium (refer to Patent Document 4, for example).
[Patent Document 4] Japanese Patent Application Publication No. JP-A-2006-272789

### Disclosure of the Invention

### [Problem to be Solved by the Invention]

With the print kiosk apparatus that uses the technologies in Patent Document 1 to Patent Document 4, because the user is able to store the image data by writing it to the CD-R or the like, it is possible to reuse the memory card many times. Moreover, the index prints are advantageous for the user, because they make it possible to know what content is stored in the CD-R or the like.

On the other hand, the remarkable increases in the capacity of the memory card mean that the capacities of many memory cards exceed the writing capacity of a single CD-R or the like. Accordingly, cases occur in which the image data in the memory card that the user provides cannot all be stored on one CD-R or the like. The need therefore arises to split the image data in the memory card among at least two CD-Rs or the like for storage, but in that case, if the index prints are created for all of the image data, the index prints themselves become so numerous that they no longer serve as an effective index for the user, although this does depend on the number of images in the image data.

Nothing is disclosed in Patent Document 1, Patent Document 3, and Patent Document 4 with regard to the aforementioned problem in case where the image data is split among a plurality of CD-Rs or the like for storage. In Patent Document 2, the image data is stored in a hard disk drive, so it is possible to store all of the image data together, but that does not provide the user with any sort of back-up, and the point about the large number of the index prints remains the same.

Thus none of the technologies in Patent Document 1 to Patent Document 4 can handle the case in which the image data in the memory card is split among the plurality of the CD-Rs or the like for storage. Therefore, in order to confirm what image data is stored on what CD-R or the like, eventually the user must open the CD-Rs or the like one at a time on a computer, which imposes more annoying labor on the user.

Therefore, a problem that the present invention attempts to solve is how to make it easy for the user to know what content is written in each of the writing media, even in case where the image data in the storage medium (the memory card) that the user provides is divided and written to a plurality of the writing media (the CD-Rs or the like).

### [Means for Solving the Problem]

The present invention solves the problem described above by the means for solving the problem below:
An image forming apparatus of the present invention includes image data reading means for reading image data that is stored in a storage medium, image forming means that is capable of forming an image in a recording medium, based on the image data that is read by the image data reading means, and image data writing means for writing the image data that is read by the image data reading means to a writing medium, the image forming apparatus comprising: image data group dividing means for comparing a writing capacity of the writing medium to a data volume of a read image data group that is an aggregation of the image data that is read by the image data reading means, and for dividing the read image data group into a plurality of written image data groups that will fit within the writing capacity in case that the data volume is greater, wherein the image forming means forms an index of images for each of the written image data groups that are divided by the image data group dividing means, and the image data writing means writes to the writing medium each of the written image data groups that are divided by the image data group dividing means.

### (Operation)

The image forming apparatus is provided with the image data group dividing means for comparing the writing capacity of the writing medium to the data volume of the read image data group that is the aggregation of the image data that has been read, and for dividing the read image data group into the plurality of the written image data groups that will fit within the writing capacity in case that the data volume is greater. In addition, the image forming means forms the index of the images for each of the written image data groups that are divided by the image data group dividing means, and the image data writing means writes to the writing medium each of the written image data groups that are divided by the image data group dividing means. A user can therefore obtain the index of the images for each of the written image data groups and can use the index to know the contents of the writing medium to which each of the written image data groups is written.

### [Effects of the Invention]

According to the invention described above, the user can obtain the index of the images for each of the written image data groups. The user can also use the index to know the contents of the writing medium to which each of the written image data groups is written. That is, even in case where the image data in the storage medium that the user provides is divided and written to a plurality of the writing media, the index makes it easy for the user to know what content is written to each of the writing media.

### Brief Description of the Drawings

FIG. 1 is an oblique view that shows an external appearance of a print kiosk apparatus in a present embodiment;
FIG. 2 is a block diagram that shows a configuration of the print kiosk apparatus in the present embodiment;
FIG. 3 is a figure that shows a user operation screen of the print kiosk apparatus in the present embodiment;
FIG. 4 is a flowchart that shows a flow of an image data back-up by the print kiosk apparatus in the present embodiment;
FIG. 5 is a figure that shows a write object selection screen of the print kiosk apparatus in the present embodiment;
FIG. 6 is a flowchart that shows a flow of dividing and writing of image data in the print kiosk apparatus in the present embodiment;
FIG. 7 is a figure that shows an image data sort operation screen of the print kiosk apparatus in the present embodiment;
FIG. 8 is a figure that shows a sort condition specification screen of the print kiosk apparatus in the present embodiment.

### [Best Mode for Carrying Out the Invention]

Hereinafter, a preferred embodiment of the present invention will be explained in detail with reference to the attached drawings. In this regard, elements that have substantially similar functions are assigned the same reference numerals in the specification and the drawings, and reduplicative explanations are omitted.

Note that in the embodiment, a print kiosk apparatus 10, which is a digital print system that reads image data from a user-provided memory card (which corresponds to a storage medium in the present invention) and uses a printer 40 (which corresponds to image forming means in the present invention) to print on photographic print paper (which corresponds to a recording medium in the present invention) an image that is selected by a command of the user, is explained as an example of an image forming apparatus of the present invention.

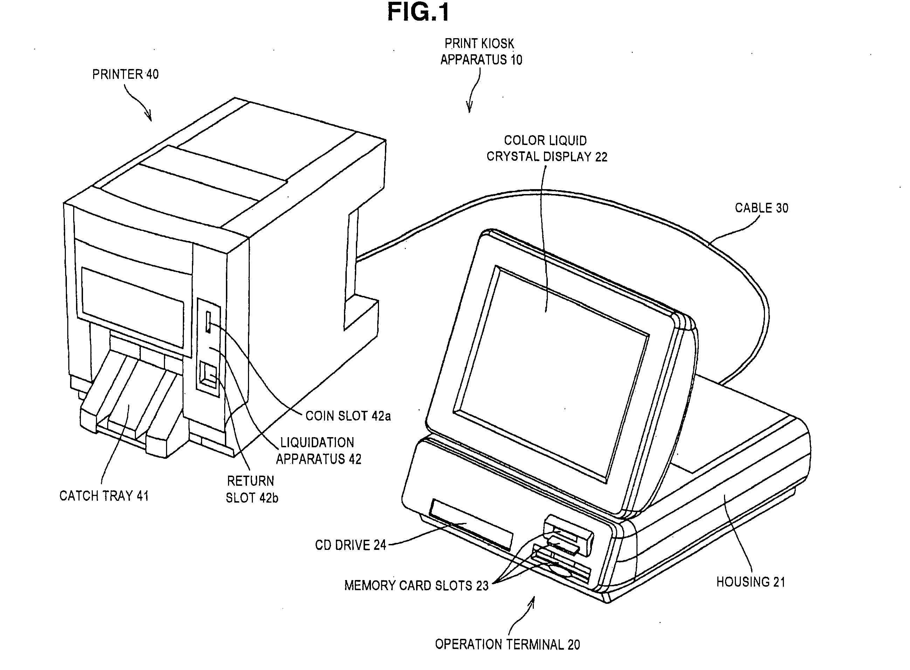

FIG. 1 is an oblique view that shows an external appearance of the print kiosk apparatus 10 in the present embodiment.
As shown in FIG. 1, the print kiosk apparatus 10 in the present embodiment includes an operation terminal 20 on which the user performs operations and the like and a printer 40 that is connected to the operation terminal 20 by a cable 30.

In the operation terminal 20, a color liquid crystal display 22 is attached to an upper portion of the front face of a housing 21, and the color liquid crystal display 22 not only displays various types of messages and images as necessary, but also has a touch panel function that is capable of accepting operations by a user.

Three memory card slots 23 (which correspond to image data reading means in the present invention) that are compatible with memory card standards and sizes are disposed in a central portion of the front face of the housing 21. The user can therefore directly insert one of various types of memory cards he has brought with him into one of the memory card slots 23 that is compatible with the standards and the like of the memory card, without using an adaptor. Then, once the memory card is inserted into a memory card slot 23, the image data that is stored in the memory card is read.

In order to copy the image data that is read from the memory card slot 23 as a back-up for the user, a CD drive 24 (which corresponds to image data writing means in the present invention) that is capable of writing the image data to a CD-R (which corresponds to a writing medium in the present invention), which is a disc-shaped, optically read storage medium, or the like is also disposed in a central portion of the front face of the housing 21. Note that a DVD drive, a BD drive, or the like that is capable of writing the image data may also be used instead of the CD drive 24.

On the other hand the printer 40 is compatible with sublimation type with colors and performs photographic printing by using a thermal head that is disposed in the interior of the printer 40 to sublimate, by thermal energy, sublimation dyes that coat an ink ribbon, transferring the sublimation dyes onto photographic print paper that is wound into a roll shape. The photographic print paper on which the images have been formed is then cut into photographs one at a time, in accordance with photographic print sizes (L size, KG size, 2L size, panorama size, or the like), and the photographs are output from a catch tray 41.

Further, in case where the image data that is read from the memory card slot 23 is written to a CD-R or the like by the CD drive 24, the printer 40 creates an index of images that is associated with the image data that is written. In other words, the print kiosk apparatus 10 is capable of performing an index print service, so the user can take with him the CD-R or the like on which the image data has been written as a back-up of the memory card and can also use the index prints to know what images have been backed up on the CD-R or the like.

A payment apparatus 42 is also attached to the printer 40. The payment apparatus 42 is a device for collecting a fee that corresponds to the number of the images that are formed on the photographic print paper (the number of pieces of the photographic print paper that are cut and output as photographs), and it includes a coin slot 42a and a return slot 42b.

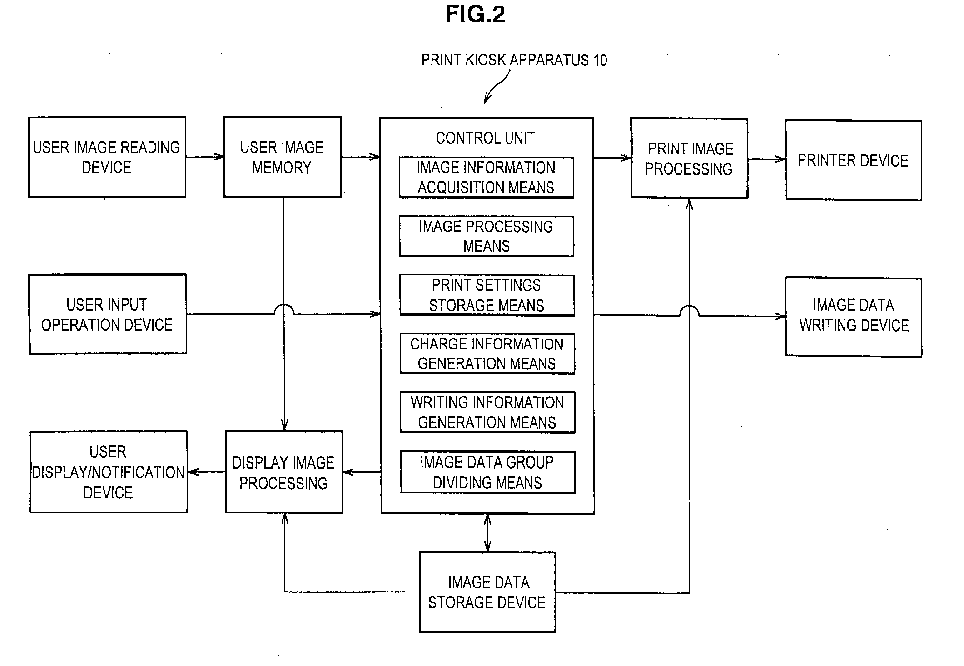

FIG. 2 is a block diagram that shows a configuration of the print kiosk apparatus 10 of the present embodiment.
As shown in FIG. 2, main portion of the print kiosk apparatus 10 is a control unit that performs computations with respect to various types of inputs and controls the print kiosk apparatus 10, and the control unit is connected to a user image reading device (which corresponds to the image data reading means in the present invention), a user input operation device, a user display/notification device, a printer device (which corresponds to the image forming means in the present invention), an image data writing device (which corresponds to the image data writing means in the present invention), and an image data storage device.

The control unit performs overall control of the print kiosk apparatus 10 in accordance with print control software and includes a CPU that performs computations and the like, a ROM in which the print control software is stored, a RAM that temporarily stores the image data and so on, and the like, for example. The control unit also performs various types of control operations that are related to an input-output function, a management function, a photographic printing function, and the like, so it functions as image information acquisition means, image processing means, print settings storage means, charge information generation means, writing information generation means, and image data group dividing means that are described later.

The user image reading device is a device that is connected to the input side of the control unit in order to input the image data that the user takes along to the control unit, and is specifically configured as the memory card slots 23 that are shown in FIG. 1. Accordingly, when the user inserts the memory card he has brought into one of the memory card slots 23, for example, the image data that is stored in the memory card is read by the user image reading device (the memory card slot 23). The image data that is read is then stored in a user image memory that is interposed between the user image reading device and the control unit, and the image information acquisition means of the control unit analyzes the image data that is stored in the user image memory and acquires various types of image information that is included in the image data (for example, EXIF information, file information, a number for each acquired image data file, and the like).

The image data storage device is a device that is connected to the control unit in preparation for a case in which the storage capacity of the user image memory is exceeded because the user brings a plurality of the memory cards, as well as for similar cases, and specifically, the image data storage device is configured in the form of a hard disk drive (not shown in the drawings) that has a large storage capacity and is internally or externally connected to the print kiosk apparatus 10. That is, a large quantity of the image data that is read from the memory card can be stored in the hard disk drive as a whole. The image data that is stored in the user image memory and the image data storage device is displayed in the form of preview images on the user display/notification device (specifically, the color liquid crystal display 22 that is shown in FIG. 1) by display image processing of the control unit. Note that the user display/notification device is not limited to being the color liquid crystal display 22 and may also be configured in the form of a flat panel display, a CRT display, and the like.

The user input operation device is a device that is connected to the input side of the control unit in order to input various types of command content that correspond to operations by the user (an image selection command, a print command, a write command to a CD-R and so on, and edit command, and the like) to the control unit, and specifically, the touch panel function of the color liquid crystal display 22 that is shown in FIG. 1 corresponds to the user input operation device. That is, by operating (touching) a Select button that is displayed on the color liquid crystal display 22, as will be described later, the user can issue a command to select an image to be printed, and by operating (touching) an OK button (a Print button), a Write button, an Adjust Color button, and the like, the user can issue a print command, a write command, an edit command, and the like. Note that the user input operation device may also be configured in the form of a push button switch, a keyboard, a pointing device, and the like, that are provided separately from the color liquid crystal display 22.

On the other hand, the printer device is a device that is connected to the output side of the control unit and is specifically configured in the form of the printer 40 that is shown in FIG. 1. In case where an image is selected by the user and a print command is issued for the image, the selected image is printed by the printer 40 through print image processing by the control unit. In other words, image printing data (editing data and the image data) that are necessary for printing the image are stored in the print settings storage means of the control unit, and when the user issues a print command (including a number of prints, a print size, and the like) in accordance with an operation screen and a displayed guidance of the user input operation device, image processing for printing is performed for the selected image that is stored in the print settings storage means, and the selected image is printed by the printer 40. The charge information generation means of the control unit then generates charge information for collecting the fee according to the number of the prints.

Further, in case where an edit command for color correction of the image or the like is issued by the user, image processing is performed by the image processing means of the control unit, and the edited image is stored in the print settings storage means of the control unit. The edited image is also displayed on the user display/notification device (the color liquid crystal display 22) through the display image processing. It is therefore possible for the user to check the preview image in which the editing results are reflected. The edited image can then be printed through the print command.

The user can also use the image data writing device (specifically, the CD drive 24 that is shown in FIG. 1) to copy the image data that is stored in the memory card to the writing medium such as the CD-R or the like and take it with him as a back-up. In that case, a combining function that is included in the image processing means of the control unit is used to lay out a plurality of images (images that are based on the image data that is stored in the image data storage device) for a single print, the image processing for printing is performed based on writing information that is stored in the print settings storage means, and the plurality of the images are output as the index prints by the printer device (the printer 40 that is shown in FIG. 1).

Herein, the index prints are created based on data such as the file names for the image data that is stored in the image data storage device, the dates and times that the files were created, the number of CD-Rs or the like, and so on. Note that the data for creating the index prints may be a number that is assigned to a read image data group that is an aggregation of the image data that is read by the user image reading device (the memory card slot 23), date information etc in the EXIF information for the image data, information on the memory card that is inserted into the memory card slot 23, the type of the writing medium such as the CD-R etc, information that is appended to the CD-R etc, such as a volume, a label, and the like, date and time information for when the image data is written, information that is unique to the print kiosk apparatus 10, any combination of those information above, and so on.

The image data writing device (the CD drive 24) is a device that copies the whole image data from a plurality of the memory cards (the image data that is stored in the image data storage device) to the CD-R or the like, and the writing performed by the CD drive 24 is performed based on information that is generated by the writing information generation means. Note that the writing information generation means generates information that pertains to the image data that will be written to the CD-R or the like, based on various types of image information that is acquired by the image information acquisition means and on format information for the CD-R or the like, and the generated information is stored in the print settings storage means.

There are cases in which the image data from the plurality of the memory cards (the image data that is stored in the image data storage device) cannot be copied as a whole due to the writing capacity of the CD-R or the like, but in these sorts of cases, the read image data group is divided by the image data group dividing means. That is, the image data group dividing means compares the data volume of the read image data group to the writing capacity of the CD-R or the like and in case where the data volume is greater, divides the read image data group to create a plurality of written image data groups, such that the image data will fit within the writing capacity. The image data writing device (the CD drive 24) takes the written image data groups that have been divided in this manner and writes them to the CD-R or the like, and the printer device (the printer 40) generates indices of (produces the index prints for) the images that are associated with each of the written image data groups that have been divided by the image data group dividing means. Note that the writing by the CD drive 24 is performed according to a user operation.

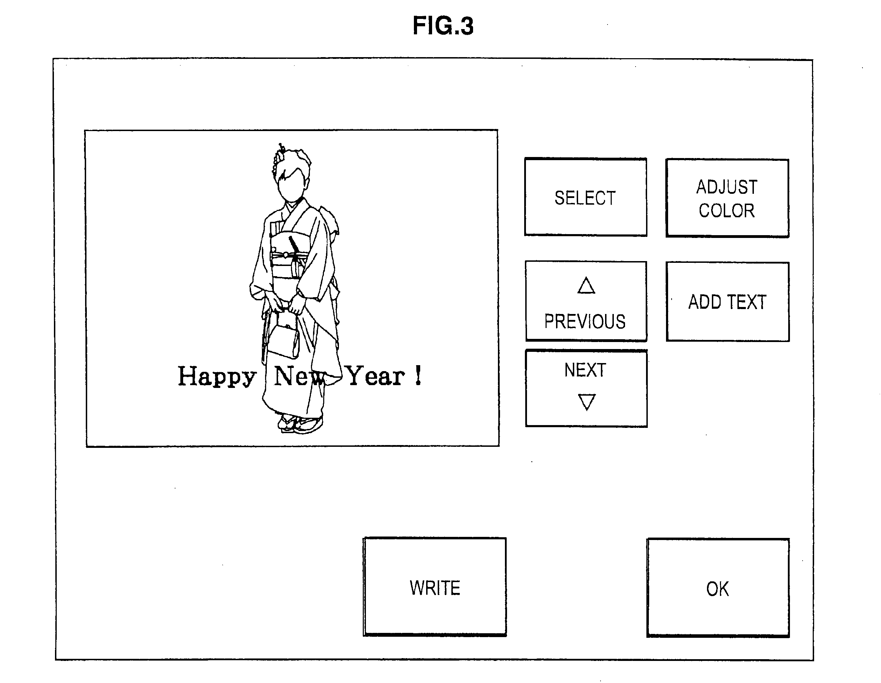

FIG. 3 is a figure that shows a user operation screen of the print kiosk apparatus 10 in the present embodiment.
The user operation screen that is shown in FIG. 3 is displayed on the color liquid crystal display 22 (refer to FIG. 1). A comparatively large preview image display area is provided on the user operation screen, and an image that the user provides is displayed in the display area based on the print application software in the control unit that is shown in FIG. 2 (an array of images may also be displayed). The user can therefore use the user operation screen that is shown in FIG. 3 to check an image of the printing result that he will get.

In addition, the Select button for selecting the image, a Previous button that causes the preview image to revert to the image that was displayed immediately before the current image, a Next button that displays a next image, the Adjust Color button for editing the colors and the like of the image, an Add Text button for adding text to the image, the OK button that issues the print command, and the Write button that issues the command to write to the CD-R or the like are displayed outside the preview image display area. Note that each of the buttons is displayed based on the print application software in the control unit that is shown in FIG. 2, the buttons are not limited to the types described above, and various types of buttons may be added.

The color liquid crystal display 22 has the touch panel function, so if the user touches any of the buttons described above, the operation that corresponds to the button will be performed. Accordingly, if the user touches one of the Previous button and the Next button, the desired preview image is displayed, and if the user touches the Select button, the image is selected to be printed.

Furthermore, if the user touches the Adjust Color button, commands for editing the preview image (to be printed) are enabled, so the user can adjust the colors and the like of the image while looking at the preview image. If the user touches the Add Text button, he can add any desired text to the image. The content of the editing is reflected in the preview image in real time, so the user can use the editing commands to produce a preferred image. Note that the preview image that is shown in FIG. 3 shows an example in which the user has touched the Add Text button and added the text "Happy New Year!" to an image of a lady wearing a kimono.

If the user touches the Write button, the image data of the image selected by touching the Select button is backed up by being written to a CD-R or the like by the CD drive 24 (refer to FIG. 1). In addition, the index prints for the images that are written to the CD-R or the like are produced by the printer 40 (refer to FIG. 1). Note that the user can select one of a portion of or all of the read image data group that is the aggregation of the image data that has been read and execute the back-up and produce the index prints for what he has selected.

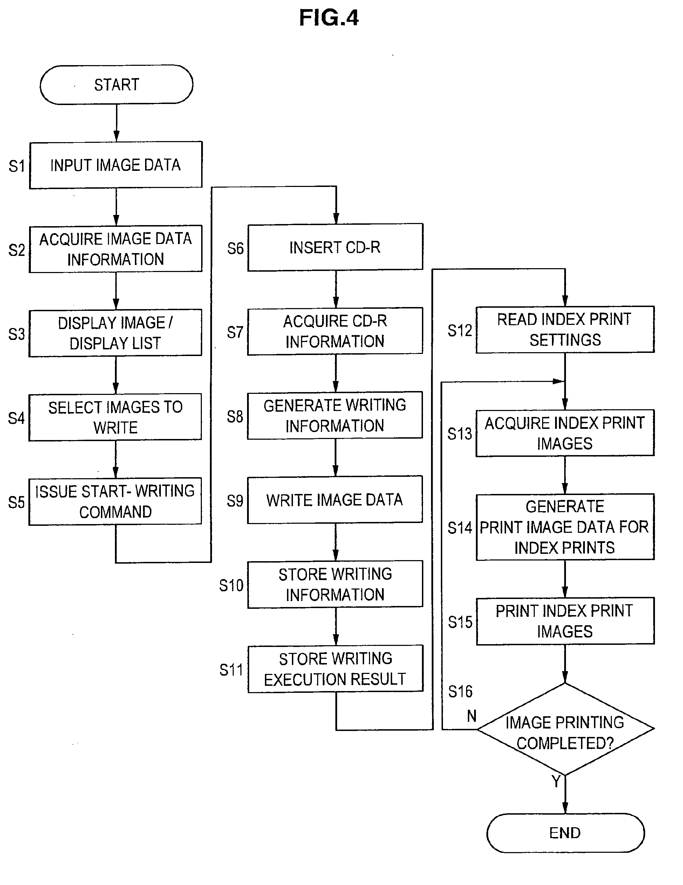

FIG. 4 is a flowchart that shows a flow of the image data back-up by the print kiosk apparatus 10 of the present embodiment.
As shown in FIG. 4, after the start, at the first Step S1, the image data that is stored in the memory card that the user has inserted into the memory card slot 23 (refer to FIG. 1) is input. Then, at the next Step S2, various types of information on the image data (for example, a numerical value that is based on the number of the read image data group, a value that is based on the EXIF information, information on each of the image data files in the read image data group, and the like) are acquired by the control unit (refer to FIG. 2). At Step S3, an image is displayed in the form of an image or an array of images on the color liquid crystal display 22 (refer to FIG. 1), based on the image data that has been input.

While checking the image that is displayed in the form of an image or an array of images at Step S3, the user selects images to write (images to back up) to the CD-R (by touching the Select button that is shown in FIG. 3) at Step S4. Then, at the next Step S5, the user issues a start-writing command (by touching the Write button that is shown in FIG. 3). At Step S6, a CD-R insertion screen is displayed on the color liquid crystal display 22 (refer to FIG. 1), so the user inserts the CD-R into the CD drive 24 (refer to FIG. 1). Note that the present invention is not limited to using the CD-R. A DVD-R or the like for which the image data writing means is compatible can also be used.

Note that when selecting the image to be written to the CD-R at Step S4, as well as when issuing the start-writing command at Step S5, the user may also be allowed to select a type of image to be written. The type of image to be written may be, for example, original image data that the user has provided, image data that has been edited by the user as explained in connection with FIG. 3, and the like.

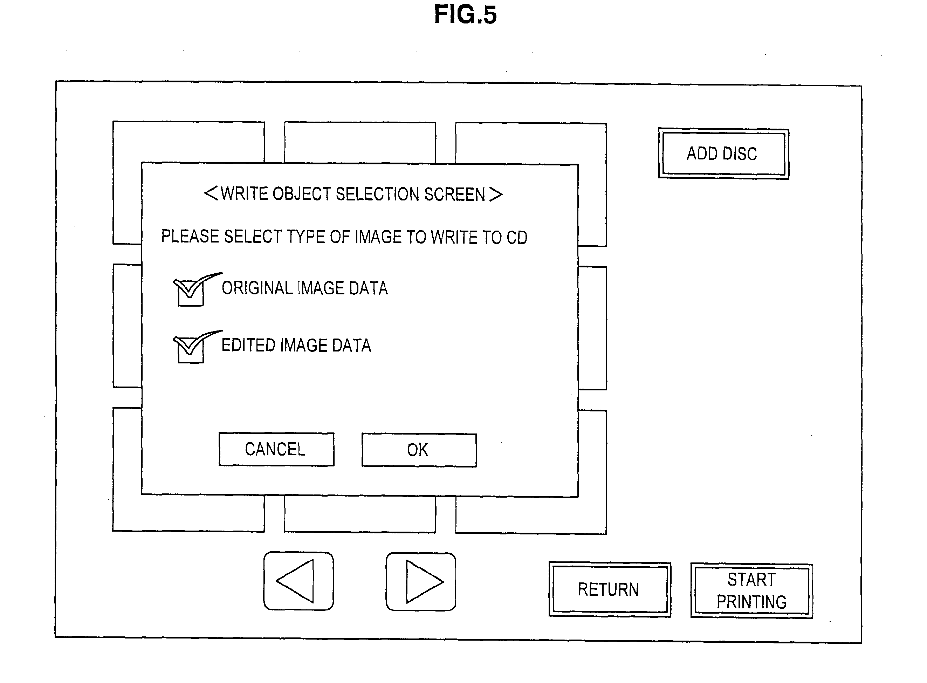

FIG. 5 is a figure that shows a screen that allows the user to select the type of image to be written in the print kiosk apparatus 10 of the present embodiment. Referring to FIG. 5, a write object selection screen is displayed as a result of the user's touching an Add Disc button. On the write object selection screen, two types which are original image data and edited image data, are shown as the options for the image data to be written to the CD-R, for example. Then, the user touches each of the options to put a check in each of the corresponding check boxes, for example, and selects the types of the image data to be written to the CD-R. And then, by making the edited image data, for example, be written to the CD-R in this manner, the user can save the need to edit the image data all over again when he wants to print the edited image again.

Returning to FIG. 4, the explanation of the flow of the image data back-up by the print kiosk apparatus 10 of the present embodiment will continue. At the next Step S7, information about the inserted CD-R (for example, the writing capacity of the CD-R, values that are based on information about the CD-R and its label, and the like) is acquired, and at the following Step S8, the writing information for writing to the CD-R is generated using the information on the image that was selected at Step S4. Then at Step S9, the writing of the image data to the CD-R is performed based on the writing information that was generated at Step S8. The writing information is then stored in the print settings storage means (refer to FIG. 2) at Step S 10, and a writing execution result is stored in the print settings storage means at Step S11.

Next, the index prints are produced based on the information that is stored in the print settings storage means (refer to FIG. 2). Specifically, settings for the index prints are read at Step S 12, and the images that will serve for the index prints are acquired at Step S13. Then print image data for the index prints is generated at the next Step S 14, and the index print images are printed at Step S 15. Note that the production of the index prints is done for a portion of or all of the written image data group (that will be written to the CD-R or the like) that has been selected by the Select button (refer to FIG. 3), which functions as image selection means of the present invention.

If a plurality of image data were written to the CD-R at Step S9, a plurality of images will accordingly serve for the index prints. Therefore, at Step S 16, a determination is made as to whether or not the printing of the index print images has been finished, and if it has not been finished, the processing returns to Step S13, the next image to be printed is acquired, and the image is printed. Then, when the printing of all of the index print images has been finished, the processing ends.

Thus the print kiosk apparatus 10 of the present embodiment is capable of writing to the CD-R and producing the index prints, but there are cases in which it is difficult to write to the CD-R at Step S9 all of the image data that is input at Step S 1. That is, in case where the writing capacity of the CD-R is insufficient, the image data need to be divided and written to a plurality of the CD-Rs.
Accordingly, the dividing of the image data and writing them to a plurality of the CD-Rs will be explained next.

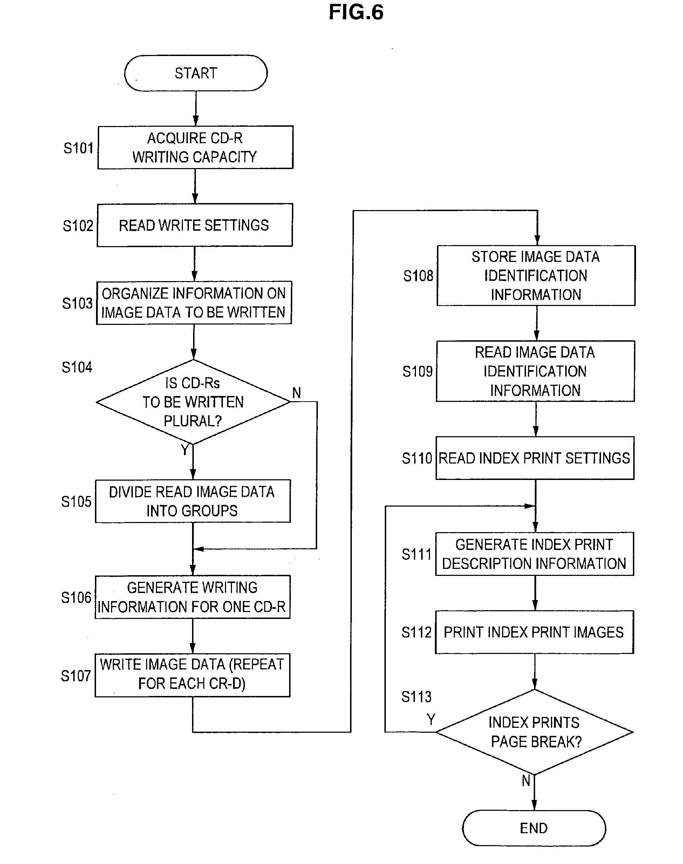

FIG. 6 is a flowchart that shows a flow of the dividing and writing of the image data in the print kiosk apparatus 10 of the present embodiment.
The flow of the dividing and writing that is shown in FIG. 6 is started when the command to start writing to the CD-R is issued (at Step S5 in FIG. 4), and at a first Step S101, the writing capacity of the CD-R is acquired. Then, at the next Step S102, write settings are read through an operation of the user, and at Step S103, information on the image data to be written is organized.

In case where the data volume of the read image data group (the aggregation of the image data that was input at Step S1 in FIG. 4) obtained from the results of the information organizing at Step S 103, is greater than the writing capacity of the CD-R that was acquired at Step S101, it may be necessary to divide the image data and write it to a plurality of the CD-Rs. Accordingly, at Step S 104, a determination is made as to whether or not a plurality of the CD-Rs to which the image data will be written is required.

If the result of the determination is that a plurality of the CD-Rs is required, the read image data group is divided at Step S105 into a plurality of the written image data groups, whose number corresponds to the number of the CD-Rs, such that each of the written image data groups will fit within the writing capacity of one CD-R.

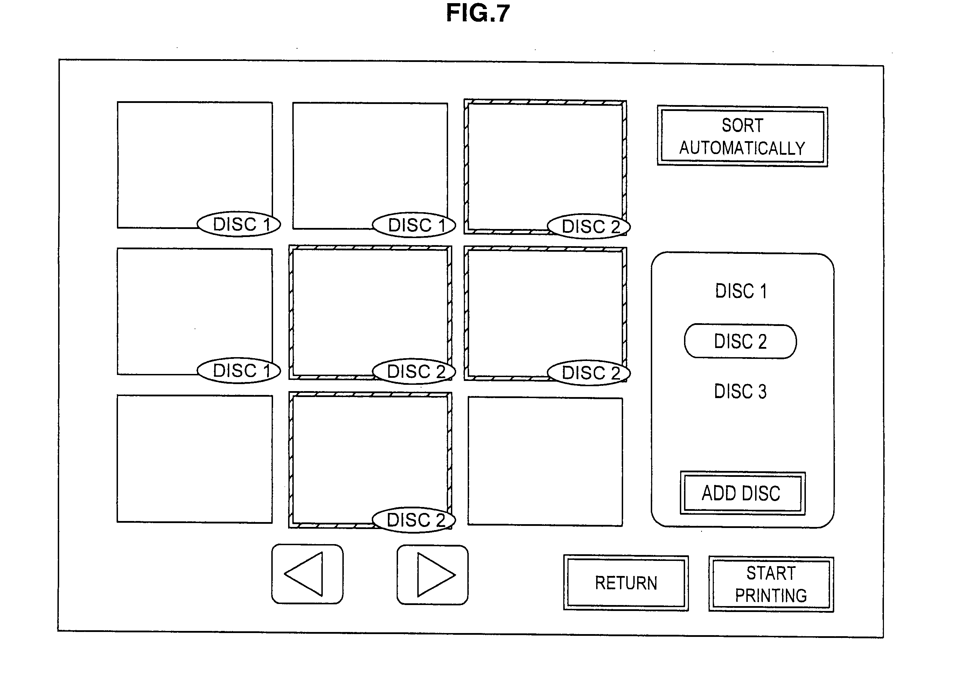

At this time, the read image data group may be divided into the plurality of the written image data groups by any given criterion. FIG. 7 is a figure that shows an example of a screen for allowing the user to issue a command to sort the image data when it is divided in the print kiosk apparatus 10 of the present embodiment.

For example, by designating the numeral of a CD-R that is displayed on the screen in FIG. 7 (such as Disc 1 to Disc 3 on the right side of FIG. 7), and then touching the images that he wants to be written to the designated CD-R from within the image data group that is displayed in the form of an array of images, the user can assign the image data to each of the CD-Rs. Then, an icon that indicates the numeral of the CD-R, for example, may be attached to the image that the user has assigned. Based on the example in FIG. 7, it can be understood that three images have already been assigned to Disc 1 and four images have already been assigned to Disc 2. In addition, the user may also touch an Add Disc button to add to the number of the CD-Rs among which the images are divided.

Alternatively, the sorting of the image data when it is divided may also be done automatically by the image data group dividing means of the print kiosk apparatus 10 instead of by allowing the user to issue a command.

For example, the read image data group can be sorted according to a specified sort condition, and after the sorting, the first to the N-th image data files can be assigned to a first written image data group, and the (N+1)-th to the 2N-th image data files can be assigned to a second written image data group. In this case, the first written image data group may be written to a first CD-R, and the second first written image data group may be written to a second CD-R, for example. The sort condition may be ascending order by the file name of the image data in the read image data group, descending order by the file names of the same, ascending order by the dates and times that the files were created (the dates and times that the images were captured) or descending order by the same, and the like.

Further, each of the image data files may also be analyzed using any image analysis technology, and the image data group may be sorted into a plurality of the written image data groups in accordance with the results of the analysis. For example, the image data group may be sorted into a plurality of the written image data groups according to photographed scenes in the various image data files that are recognized by a scene analysis technology. Alternatively, the image data group may also be sorted into a plurality of the written image data groups according to the persons who are photographed, as recognized using a face recognition technology, for example.

Furthermore, in case where a plurality of types of image data, such as the original image data and the edited image data or the like, are written to the CD-R, as explained in connection with FIG. 5, the original image data and the edited image data may be respectively sorted into separate written image data groups, for example.

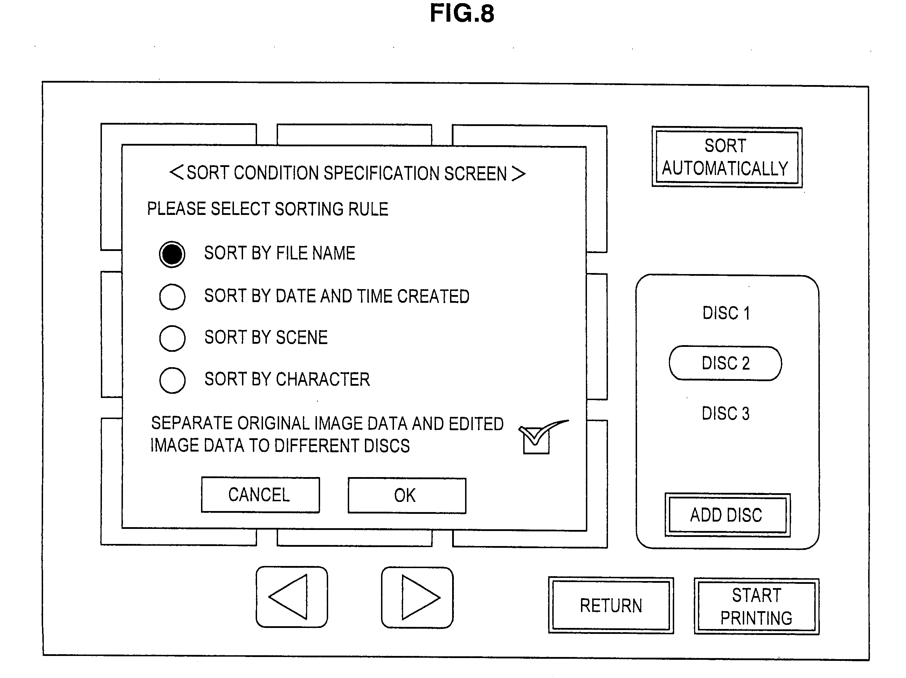

FIG. 8 is a figure that shows an example of a screen (a sort condition specification screen) that allows the user to specify the sort condition in case where the user prefers automatic sorting when the image data group is divided. Referring to FIG. 8, four sort conditions, in file name order, in date and time of creation order, by scene, and by person, are displayed as examples on the sort condition specification screen. A check box for specifying whether or not the original image data and the edited image data are to be respectively sorted into separate written image data groups is also displayed.

As the result of this kind of sorting of the image data group, one read image data group is divided into a plurality of the written image data groups such that the data volume of each of the written image data groups will fit within the writing capacity of one CD-R. Note that if what to be written will fit within one CD-R as a whole at Step S 104, Step S 105 is skipped.

For each of the written image data groups that has been made in this manner such that it will fit into one CD-R, the writing information for the one CD-R is generated at the next Step S106 (which corresponds to the Step S8 in FIG. 4), and the image data (the written image data group) is actually written to the CD-R at Step S107 (which corresponds to the Step S9 in FIG. 4).

In case where it is determined at Step S 104 that the number of the CD-Rs to which the image data will be written is greater than one, the writing of the image data at Step S107 is repeated for each of the CD-Rs, and in that case, image data identification information is created for each of the CD-Rs such that it will be possible later to identify which image data (which written image data group) is written to which of the CD-Rs. The image data identification information is then stored in the print settings storage means (refer to FIG. 2) at the next Step S 108.

Next, at Step S109, the image data identification information is read, and at the following Step S110 (which corresponds to the Step S12 in FIG. 4), the settings for the index prints are read. Then, after the information is generated that will be included in the index prints at Step S111, the index print images are printed at Step S 112 (which corresponds to the Step S 15 in FIG. 4).

Herein, the information that is included in the index prints is information that is added based on the image data identification information that is stored in the print settings storage means (refer to FIG. 2) when the index print images are printed and on the writing information for writing the image data to the CD-R, and is in a format that makes it easy for the user to recognize which image data has been written to which CD-R. For example, in case where CD-R numbering information and the names of the image data files are included, the information is added in a format that includes the character string "CD-R No. _, file names". Therefore, based on the index prints, the user can easily identify to which of the CD-Rs the image data has been written. Note that it is also possible to read the added information on the image data and to create an index that includes the added information, as well as to create an index that includes individualized information that makes it possible to specify individually the image data files that have been written to the CD-Rs.

In case where the index prints for a plurality of the CD-Rs are printed on one piece of paper, boundary lines that separate the plurality of the CD-Rs serve as page breaks between pages of the index prints, such that the linkage between the index prints and the corresponding CD-Rs will become clear. Therefore, at Step S113, a determination is made as to whether or not there is a page break in the index prints, and in case where there is a page break, the processing returns to Step S111, where the information is generated that will be included in the corresponding page, after which the index print images are printed once again at Step S 112. If there is no page break, the processing ends. Note that it is also possible to print a set of respective index prints for each of the plurality of the CD-Rs.

Thus, during the writing of the image data to the CD-R or the like, in case where it is necessary to divide the read image data group into a plurality of groups due to a limit on the writing capacity of the CD-R or the like, the print kiosk apparatus 10 of the present embodiment divides the read image data group into a plurality of the written image data groups, such that each of the written image data groups will fit on one CD-R or the like, and prints the written image data groups that are written to each of the CD-Rs or the like as the index prints Therefore, when the image data of the user is written to the CD-Rs or the like, the index prints that correspond to the CD-Rs or the like will be added concurrently, so by using the index prints, the user can easily know which image data is stored in which of the CD-Rs or the like.

Furthermore, because the writing to the CD-Rs or the like and the creation of the index prints may be executed for the image data in a memory card, it becomes possible to provide a service that provides the user with the back-up of the image data and the index prints that serve as a table of contents for the image data that has been backed up. Moreover, the adding of the index prints to the CD-R or the like may give a clear rationale for using the print kiosk apparatus 10, so a shop that introduces the print kiosk apparatus 10 can expect to profit from an increase in the number of images to be printed.

A preferred embodiment of the present invention has been explained with reference to the attached drawings, but the present invention is apparently not limited to the examples above. It should be understood by those skilled in the art that various modifications and alterations may occur within the scope of the appended claims or the equivalents thereof and those modifications and alterations are considered of course to belong to the technical scope of the present invention.

## Claims

1. An image forming apparatus that includes:
image data reading means for reading image data that is stored in a storage medium,
image forming means that is capable of forming an image in a recording medium, based on the image data that is read by the image data reading means, and
image data writing means for writing the image data that is read by the image data reading means to a writing medium,
the image forming apparatus comprising:
image data group dividing means for comparing a writing capacity of the writing medium to a data volume of a read image data group that is an aggregation of the image data that is read by the image data reading means, and for dividing the read image data group into a plurality of written image data groups that will fit within the writing capacity in case that the data volume is greater,
wherein the image forming means forms an index of images for each of the written image data groups that are divided by the image data group dividing means, and
the image data writing means writes to the writing medium each of the written image data groups that are divided by the image data group dividing means.

2. The image forming apparatus according to claim 1,
wherein the image data reading means is capable of reading added information for the image data that is stored in the storage medium, and the image forming means forms an index that includes the added information that is read by the image data reading means.

3. The image forming apparatus according to claim 1,
wherein the image forming means forms an index that includes individualized information that makes it possible to specify individually the image data that has been written by the image data writing means.

4. The image forming apparatus according to claim 1, further comprising:
image selection means for selecting a portion of or all of each of the written image data groups,
wherein the image forming means forms an index of images for the portion of or all of each of the written image data groups that was selected by the image selection means.
